Europäisches Patentamt

(19) European Patent Office

Office européen des brevets

(11) Veröffentlichungsnummer: **0 154 771**
**B1**

(12) **EUROPÄISCHE PATENTSCHRIFT**

(45) Veröffentlichungstag der Patentschrift:
**11.03.87**

(21) Anmeldenummer: **85100251.9**

(22) Anmeldetag: **12.01.85**

(51) Int. Cl.⁴: **B 05 D 7/16,** B 05 D 1/38,
C 09 D 5/44

(54) Verfahren zur Herstellung von Mehrschichtlackierungen.

(30) Priorität: **27.01.84 AT 268/84**

(43) Veröffentlichungstag der Anmeldung:
**18.09.85 Patentblatt 85/38**

(45) Bekanntmachung des Hinweises auf die Patenterteilung:
**11.03.87 Patentblatt 87/11**

(84) Benannte Vertragsstaaten:
**BE CH DE FR GB IT LI NL SE**

(56) Entgegenhaltungen:
**FR - A - 2 359 190**
**FR - A - 2 496 502**
**US - A - 4 035 274**

(73) Patentinhaber: **Vianova Kunstharz Aktiengesellschaft,**
**A-8402 Werndorf (AT)**

(72) Erfinder: **Hönig, Helmut, Dr., Seebachergasse 10,**
**A-8010 Graz (AT)**
Erfinder: **Pampouchidis, Georg, Dr., Obere**
**Teichstrasse 31, A-8010 Graz (AT)**

(74) Vertreter: **Pitter, Robert, Dr. et al,**
**Leechgasse 21 Postfach 191, A-8010 Graz (AT)**

## Beschreibung

Die Erfindung betrifft ein Verfahren zur Herstellung von Mehrschichtlackierungen aus K-ETL-Grundierungen (kathodischen Elektrotauchgrundierungen), welche thermisch polymerisierbare Kunstharze als Bindemittel enthalten, und Folgeschichten auf Lösungsmittelbasis. Ein Verfahren dieser Art ist z.B. aus FR-A-2 496 502 bekannt.

Aus den US-PSen 43 20 220, 42 38 594 und 41 74 332 sowie der AT-PS 366 082 sind Bindemittel für kathodisch abscheidbare Überzugsmittel (K-ET-Lacke) bekannt, welche aufgrund ihres Gehaltes an endständigen Doppelbindungen beim Einbrennen im wesentlichen durch Polymerisation vernetzen. Bindemittel dieser Art werden bereits in grossem Umfang in der Praxis, vorzugsweise in der Automobilindustrie eingesetzt, wobei die thermische Vernetzung bei einer Objekttemperatur von 170 bis 180 Grad C erfolgen muss, damit die von der Industrie geforderten hohen Korrosionsschutzwerte erreicht werden.

Aus technologischen Gründen und zur Energieeinsparung wird von der verarbeitenden Industrie in zunehmendem Masse eine Herabsetzung der notwendigen Härtungstemperatur für die Grundierung auf 150 bis maximal 170 Grad C gefordert, wobei selbstverständlich keine Einbussen hinsichtlich der Korrosionsfestigkeit dieser Schicht bzw. des Gesamtaufbaues in Kauf genommen werden können.

Es wurde nun beobachtet, dass mit den in den obengenannten Patentschriften beschriebenen Bindemitteln eine ausreichende Vernetzung des Lackfilms bei Herabsetzung der Einbrenntemperatur prinzipiell möglich ist. In der Praxis hat es sich jedoch gezeigt, dass bei den angestrebten Einbrenntemperaturen zwischen 140 und maximal 170° C Schwierigkeiten im Zusammenhang mit den auf der K-ETL-Grundierung aufgebrachten Folgeschichten auftreten. Diese werden durch eine bei fallender Einbrenntemperatur zunehmende Quellbarkeit der Filmoberfläche der Grundierung durch aggressive Lösungsmittel in der Folgeschicht verursacht. Dieser Effekt ist unmittelbar nach dem Einbrennen der Grundierung am stärksten und nimmt bei Lagerung des grundierten Objekts ab. So ist beispielsweise eine bei 150 Grad C eingebrannte Grundierung auf dieser Basis spätestens nach einer Lagerzeit von 3 Wochen gegen die Lösungsmittel völlig resistent. Diese Veränderungen in den Oberflächeneigenschaften der Grundierung sind in vielen Fällen Ursache für eine verbesserte Durchhärtung von Füller- oder Decklackschichten und damit einer verbesserten Belastbarkeit bei Schlagbeanspruchungen. Gegenüber PVC-Materialien, wie sie als Unterbodenschutz oder Dichtungsmaterialien eingesetzt werden, oder gegenüber Klebematerialien zeigt sich eine wesentlich verbesserte Zwischenschichthaftung. Solche Lagerzeiten sind natürlich bei der Serienlackierung nicht möglich. Üblicherweise werden die Folgeschichten spätestens 1 Stunde nach dem Einbrennen aufgebracht.

Aufgabe der Erfindung war es daher, die Oberflächenhärte der bei 140 bis 170 Grad C eingebrannten Grundierungen so weit zu verbessern und damit die Quellbarkeit durch organische Lösungsmittel so weit herabzusetzen, dass eine unmittelbare Überlackierung ohne Störung in den Folgeschichten möglich ist.

Überraschenderweise wurde nun gefunden, dass die genannten Nachteile überwunden werden können, wenn man die bei 140 bis 180 Grad C eingebrannte K-ETL-Grundierung auf Basis von durch Polymerisation vernetzbaren Bindemitteln, vor der Applikation einer Folgeschicht, kurzzeitig mit einer ionisierenden Strahlung, insbesondere einer UV-Strahlung, behandelt.

Die Härtung von Elektrotauchlacken durch ionisierende Strahlung ist aus der Literatur seit langem bekannt, doch hat sich das Verfahren für die Praxis als wenig brauchbar erwiesen, da eine Härtung der Lackschicht in Hohlräumen oder an abgeschirmten Stellen nicht durchführbar ist. Die Verfahren, wie sie in den US-PSen 40 40 925; 40 35 272; 42 52 734; 40 39 414; 40 29 561 oder den DE-OSen 23 01 075 und 30 05 034 beschrieben sind, haben dementsprechend für die Beschichtung von Objekten wie Autokarossen etc. nur akademisches Interesse.

Kombinationen von Ofentrocknung und Vernetzung durch ionisierende Strahlung zur Härtung von kathodisch abgeschiedenen Grundierungen sind aus den US-PSen 40 35 274 und 40 66 523 bekannt. In diesen Fällen soll durch eine erste Phase der Ofentrocknung dem abgeschiedenen Film eine Möglichkeit zum Verlaufen («flow-out») gegeben werden. Die Vernetzung des Films erfolgt auch in diesen Fällen durch UV-Strahlung. Auf diese Vernetzungsmethode sind deshalb auch die beschriebenen Bindemittel abgestimmt. Auch diese Verfahren sind für Objekte, welche schwerzugängliche oder unzugängliche Teile aufweisen, nicht verwendbar.

Die vorliegende Erfindung betrifft demgemäss ein Verfahren zur Herstellung von Mehrschichtlackierungen bestehend aus einer K-ETL-Grundierung, welche als Bindemittel thermisch polymerisierbare Kunstharze enthält, und einer Folgeschicht auf Lösungsmittelbasis, wobei das Verfahren dadurch gekennzeichnet ist, dass die kathodisch abgeschiedene Grundierung bei einer Temperatur von 140 bis 180 Grad C praktisch vollständig ausgehärtet wird und vor dem unmittelbar folgenden Auftrag der Folgeschicht 1 bis 20 Sekunden mit ionisierender Strahlung bestrahlt wird.

Es war überraschend, dass bereits durch eine geringe Bestrahlung die Filmoberfläche gegen den Lösungsmitteleinfluss widerstandsfähig gemacht wird, wodurch eine Quellung der Grundierung bei der Überlackierung und damit Störungen bei der Filmbildung verhindert werden. Überdies werden dadurch negative Einflüsse durch den basischen Charakter der kationischen Grundierung auf die in den meisten Fällen sauer katalysierten Vernetzungsvorgänge in der Folgeschicht verhindert. Ein weiterer Effekt, welcher durch den erfindungsgemässen Verfahrensschritt erreicht wird, ist eine deutliche Verbesserung der Haftung von PVC-Materialien und ähnlichen Produkten, wie sie für den Unterbodenschutz, in Dichtungsmassen oder bei Metallverbundmassen, vor allem in der Automobilindustrie, eingesetzt werden.

Die erfindungsgemäss eingesetzten Grundierungen enthalten als Bindemittel Kunstharze, wie sie in den im Stand der Technik angeführten Patenten beschrieben sind. Es handelt sich dabei um wasserverdünnbare, kationische Bindemittel, welche eine ausreichende Zahl von endständigen Doppelbindungen aufweisen, welche beim Einbrennen durch thermische Polymerisation vernetzen. Vorzugsweise dienen modifizerte Epoxidharze auf Basis von Bisphenol A oder von Phenolnovolaken als Komponenten dieser Elektrotauchlacksysteme. Die Herstellung dieser Harze und ihre Verarbeitung sind in den genannten Literaturstellen ausführlich beschrieben.

Der Nachteil, dass bei der Härtung durch Strahlung abgeschirmte Stellen, wie Hohlräume etc. nicht erfasst werden, ist beim erfindungsgemässen Verfahren ohne Bedeutung, da die Folgeschichten im wesentlichen auf Sichtflächen, welche einer Bestrahlung leicht zugänglich sind, aufgebracht werden.

Als Folgeschicht wird auf die Grundierung üblicherweise ein Füller als Zwischenschicht oder gegebenenfalls direkt ein Decklack aufgebracht. Füllermaterialien basieren üblicherweise auf Alkyd-Aminoharzsystemen auf Lösungsmittelbasis; Decklacke enthalten als Bindemittel entweder ebenfalls Alkydharz/Aminoharz-Kombinationen oder Acrylat/Aminoharz-Kombinationen. Bekanntlich handelt es sich bei der Vernetzung dieser Systeme um Reaktionen, welche durch Säuren katalysiert werden. Der Aufbau und die Zusammensetzung dieser Systeme sind dem Fachmann bekannt und in der Literatur vielfach beschrieben. (Siehe beispielsweise ULLMANNS Encyklopädie der technischen Chemie, 4. Auflage, Band 15 oder H. KITTEL, Lehrbuch der Lacke und Beschichtungen, Verlag W.A. COLOMB.)

Ein anderer Typ von Folgeschichten sind Materialien, welche als Unterbodenschutz, als Dichtungsmassen oder als Metallverbundmassen eingesetzt werden. Diese Materialien basieren in den meisten Fällen auf Plastisolen, d.h. Dispersionen von Kunststoffen, insbesondere PVC, in Weichmachungsmitteln.

Die Grundierung wird in bekannter Weise auf dem in üblicher Weise vorbehandelten Substrat, in der Fahrzeugindustrie insbesondere phosphatierte Stahlbleche, im K-ETL-Verfahren aufgebracht. Dabei wird das Objekt als Kathode geschaltet und das Lackmaterial, welches als Bindemittel zumindest anteilsweise kationische Harze enthält, durch Anlegen einer Gleichspannung abgeschieden.

Nach Abspülen des anhaftenden Badmaterials wird die Grundierung bei 140 bis 180 Grad C durch thermische Polymerisation vernetzt.

Vor dem Aufbringen der Folgeschicht wird die eingebrannte Grundierung erfindungsgemäss einer kurzzeitigen Einwirkung einer UV-Strahlung ausgesetzt. Die Bestrahlungszeit beträgt dabei 1 bis 20 Sekunden. Als Strahlungsquelle eignen sich dabei handelsübliche Nieder-, Mittel- oder Hochdruck-Quecksilber-Lampen, wie sie auch in der Literatur beschrieben sind (z.B. «UV-Curing, Science and Technology» von S.P. Papas, Technol. Market Corp., Stamford (USA), 1978).

Eine Verwendung von UV-Sensibilisierungsmitteln ist für das erfindungsgemässe Verfahren nicht nötig, da die wesentliche Vernetzungsreaktion durch thermische Polymerisation erfolgt.

Anstelle einer Bestrahlung mit UV-Licht kann die Bestrahlung auch mit anderen ionisierenden Strahlen, wie Elektronenstrahlen, erfolgen.

Die anschliessende Applikation der Folgeschicht erfolgt in bekannter Weise durch Spritzen und nachfolgendes Einbrennen.

Die folgenden Beispiele erläutern die Erfindung, ohne ihren Umfang zu beschränken.

*Beispiel 1:* Zinkphosphatierte Stahlbleche, wie sie in der Automobilindustrie Anwendung finden, werden in üblicher Weise mit einem kathodisch abscheidbaren Elektrotauchlack beschichtet. Der Lack wurde mit einem Bindemittel entsprechend dem Beispiel 7 der US-PS 41 74 332 gemäss folgender Rezeptur formuliert:

| | | |
|---|---|---|
| 100,- | Bindemittel, 100%ig | |
| 0,3 | Farbruss | |
| 3,- | Bleisilikat | |
| 36,7 | Titandioxid | |

Die beschichteten Bleche wurden in üblicher Weise mit Wasser gespült und bei einer Objekttemperatur von 150 Grad C 17 Minuten eingebrannt. Die Schichtstärke der Grundierung liegt bei $22 \pm 2$ µm. Etwa 1 Stunde nach dem Einbrennen werden die Bleche mit einer handelsüblichen, für Lackhärtung entwickelten UV-Strahlungsquelle 6, 12 und 18 Sekunden bestrahlt. Als Strahlungsquelle wurde ein Gerät mit der Bezeichnung «PRIMARC MINICURE, MARK 2» der Fa. Primarc (Jigs and Lamps) Ltd., Henley-on-Thames, England eingesetzt. Es handelt sich dabei um eine Mitteldruck-Quecksilberlampe (200 WATT/INCH = 78,7 WATT/cm).

Die Prüfung der Bleche erfolgt in folgender Weise:

1. Acetontest: Ein mit Aceton getränkter Wattebausch wird 60 Sekunden auf die Lackoberfläche gepresst. Beurteilt wird die Kratzbarkeit der Oberfläche unmittelbar nach Entfernen des Wattebausches (1 = in Ordnung, kein Angriff, 2 = noch verletzbar, 5 = leicht verletzbar).

2. Überlackierbarkeit und Decklackhaftung: Das grundierte Blech wird mit einem handelsüblichen säurekatalysierten Automobil-Decklack auf Acrylatharz-Aminoharz-Basis überspritzt und 30 Minuten bei 120 Grad C eingebrannt. (Trockenfilmstärke $70 \pm 5$ µm.)

Beurteilt wird die Steinschlagfestigkeit der Beschichtung nach Beschuss der Lackoberfläche mit Stahlschrot. (Angegeben wird der Grad des Abplatzens der Folgeschicht: 5 = vollständig abgeplatzt.)

3. PVC-Haftung:

Auf das Testblech wird ein 3 cm breiter und 2 mm dicker Streifen einer handelsüblichen PVC-Plastisol-Paste aufgezogen und 7 Minuten bei 125 Grad C Objekttemperatur gehärtet. Beurteilt wird die Abziehbarkeit der PVC-Schicht. (5 = leicht abziehbar.)

Ergebnis der Prüfung:

| | UV-Bestrahlungszeit (Sekunden) | | | |
|---|---|---|---|---|
| | 0 | 6 | 12 | 18 |
| Acetontest | 5 | 1-2 | 1 | 1 |
| Überlackierbarkeit/ Steinschlagtest | 5 | 2-3 | 1 | 1 |
| PVC-Haftung[+] | 5 | 2 | 1-2 | 1 |

[+] geprüft wurden die Produkte:

Unterbodenschutz: Intercol,
           Thermocoat 01779[x]
           Salem, AKR 303005
Grobabdichtung:   Teroson AKD 475000[xx]
Feinabdichtung:   Teroson AKD 473001[xx]

Bersteller:

[x] Intercoat Kleb- und Riechstoff GmbH, Bodenheim/Rhein
[xx] Teroson GmbH, Heidelberg, BRD

*Beispiel 2:* In einer Versuchsreihe wurden weitere Lacksysteme in Verbindung mit verschiedenen PVC-Materialien in bezug auf die Auswirkung einer UV-Strahlung auf die Zwischenschichthaftung untersucht.

Als K-ETL-Material wurden dabei Lacke aus

    100     Tlen Bindemittel (Festharz)
    0,3     Tlen Farbruss
    3     Tlen Bleisilikat und
    36,7     Tlen Titandioxid

verwendet, wobei als Bindemittel folgende Harzkombinationen eingesetzt wurden:

Bindemittel A: Bindemittelkombination gemäss Beispiel 4 der EP-B1-00 49 369
Bindemittel B: Kombination aus 30 Tlen (Festharz) eines Bindemittels gemäss Beispiel 29 der US-PS 4,174,332 und 70 Tlen (Festharz) gemäss Beispiel 8 der EP-B1-00 12 463

Die K-ETL-Grundierungen wurden wie in Beispiel 1 angegeben aufgebracht und bestrahlt. Als UV-Strahlungsquelle diente in diesem Fall ein UV-Strahler HANOVIA Typ 8512 A 431 (Strahlungsintensität 80 W/cm bei 365 nm; Hersteller Ulrich Steinemann AG, St. Gallen, Schweiz). Der Objektabstand betrug 8 cm.

Der PVC-Schicht wurde in Form eines Streifens von 2 mm Dicke und 1 cm Breite 30 Minuten nach dem Einbrennen der K-ETL-Grundierung appliziert und 7 Minuten bei 140° C (Objekttemperatur) gehärtet. Die Prüfung der Haftung erfolgte 1 Stunde nach dem Einbrennen.

Als PVC-Materialien wurde ein handelsüblicher Unterbodenschutz (Stankiewicz 2252 der Fa. Stankiewicz GmbH, Celle, BRD) sowie eine in der Automobilindustrie eingesetzte Nahtabdichtungsmasse (Dekalin 9003 der Fa. Dekalin, Deutsche Klebstoff-Werke, Hanau, BRD) verwendet.

Die Ergebnisse, welche den offensichtlichen Einfluss einer UV-Bestrahlung der ausgehärteten Filme zeigen, sind in der folgenden Tabelle zusammengefasst.

| Bestrahlungszeit (Sekunden) | | | | |
|---|---|---|---|---|
| K-ETL-Lack | 0 | 5 | 10 | 15 |
| Unterbodenschutz | | | | |
| A | 5 | 2 | 1 | 1 |
| B | 5 | 2-3 | 1- | 1 |
| Nahtabdichtungsmasse | | | | |
| A | 5 | 3 | 1-2 | 1 |
| B | 5 | 3-4 | 2 | 2-2 |

Eine Bestrahlung unter $N_2$-Atmosphäre ergibt keine Änderung der Ergebnisse.

**Patentansprüche**

1. Verfahren zur Herstellung von Mehrschichtlackierungen bestehend aus einer K-ETL-Grundierung (einer kathodischen Elektrotauchgrundierung), welche als Bindemittel thermisch polymerisierbare Kunstharze enthält, und einer Folgeschicht auf Lösungsmittelbasis, *dadurch gekennzeichnet,* dass die kathodisch abgeschiedene Grundierung bei einer Temperatur von 140 bis 180 Grad C praktisch vollständig ausgehärtet wird und vor dem unmittelbar folgenden Auftrag der Folgeschicht 1 bis 20 Sekunden mit ionisierender Strahlung bestrahlt wird.

2. Verfahren nach Anspruch 1, dadurch gekennzeichnet, dass die Grundierung mit UV-Licht bestrahlt wird.

3. Verfahren nach den Ansprüchen 1 und 2, dadurch gekennzeichnet, dass als Folgeschicht, gegebenenfalls säurekatalysierte, Alkyd-Aminoharz- oder Acrylat-Aminoharz-Kombinationen oder PVC-Plastisole eingesetzt werden.

**Revendications**

1. Procédé pour la préparation de peintures multicouches constituées d'une couche de fond K-ETL (d'une couche de fond électrophorétique cathodique), laquelle contient en tant que liants des résines synthétiques thermiquement polymérisables, et d'une couche suivante à base de solvant, ce procédé étant caractérisé en ce que la couche de fond déposée cathodiquement à une température de 140 à 180° C est pratiquement entièrement durcie et soumise à une irradiation ionisante pendant 1 à 20 secondes avant l'application immédiatement subséquente de la couche suivante.

2. Procédé selon la revendication 1, caractérisé en ce que l'on irradie la couche de fond à la lumière UV.

3. Procédé selon les revendications 1 et 2, caractérisé en ce qu'en tant que couche suivante, on met en œuvre des combinaisons alkyde-aminorésine ou acrylate-aminorésine ou des plastisols PVC, éventuellement catalysés par acide.

## Claims

1. Process for producing multiple coat systems consisting of a CED primer (a cathodic electrodeposition primer) containing as binder thermically polymerisable synthetic resins and a following coating based on solvents, characterised in that the cathodically deposited primer is practically fully cured at a temperature of between 140 and 180° C and, prior to the immediately following application of the next coat is irradiated for 1 to 20 seconds with ionising radiation.

2. Process according to claim 1, characterised in that the primer is irradiated with UV-light.

3. Process according to claims 1 and 2, characterised in that as the following coat optionally acid-catalysed alkyd-amino resin or acrylics-amino resin combinations or plastisols are used.